# FASCICULE DE BREVET EUROPEEN

(11) **EP 2 764 154 B1**
(45) Date de publication et mention de la délivrance du brevet: **09.01.2019**
(21) Numéro de dépôt: 12773092.7
(22) Date de dépôt: 26.09.2012
(51) Int. Cl.: D06N 7/00, C08K 5/12, C08L 27/06, B32B 27/18, B32B 27/20, B32B 27/22, B32B 27/30, B32B 27/06, C08K 7/00

(54) **REVETEMENT DE SOLS SOUPLE INCLUANT UNE COMPOSITION LIMITANT ET RETARDANT LA REMONTEE DE PRODUITS JAUNISSANTS**
FLEXIBLER BODENBELAG MIT EINER ZUSAMMENSETZUNG ZUR MINIMIERUNG UND VERZÖGERUNG DES AUFKOMMENS DER VERGILBUNGSSTOFFEN
FLEXIBLE FLOORING INCLUDING A COMPOSITION MINIMIZING AND RETARDING THE RISE OF YELLOWING MATERIALS

(30) Priorité: 03.10.2011 FR 1158889
(43) Date de publication de la demande: 13.08.2014
(73) Titulaire: GERFLOR, 69100 Villeurbanne (FR)
(72) Inventeur: CRIONAY, Xavier, F-84500 Bollene (FR); BRONCHART, Damien, F-69550 Cublize (FR); REYNAUD, Gilles, F-26290 Donzere (FR); JULIEN, Hervé, F-42110 Civens (FR)
(74) Mandataire: Cabinet Laurent & Charras
(86) Numéro de dépôt international: PCT/FR2012/052160
(87) Numéro de publication internationale: WO 2013/050687

(56) Documents cités:
- EP-A1- 0 192 590
- WO-A1-2011/110350
- US-A- 4 510 201
- US-A- 5 308 694
- US-A1- 2011 027 601

## Description

L'invention se rattache au secteur technique des revêtements de sols souples, et en particulier des revêtements traités pour assurer une fonction anti-jaunissement avec des effets visuels apparents en surface.

Il est bien connu que les revêtements de sols souples, en PVC par exemple, sont collés en situation de chantier à l'aide de colles qui sont, soit des colles acryliques (avec dispersion de polymères acryliques dans l'eau), soit par des colles néoprènes dispersées dans un solvant. Les colles acryliques sont majoritairement utilisées pour les grandes surfaces d'encollage, tandis que les colles néoprènes sont utilisées pour les zones où la colle doit présenter une adhérence rapide et forte (remontées en plinthes angles rentrants, angles sortants).

On constate régulièrement l'apparition de tâches jaunâtres en surface de revêtements qui sont indépendantes du vieillissement du revêtement, mais qui proviennent d'effets de remontées de colles à travers des particules propres aux colles utilisées, quelle qu'en soit la catégorie. Ces tâches jaunâtres sont très difficiles à faire disparaître, sauf avec des traitements coûteux.

En pratique, différentes études ont été menées pour comprendre ce phénomène. Elles ont permis de mettre en évidence la présence d'un composé organique, à structure aromatique conjuguée, présent à la fois dans la colle à base acrylique et à la surface du revêtement de sol jauni. Ce composé organique n'a cependant pas été trouvé dans la partie revêtement de sol qui n'a pas été collée.

Ainsi, de cette étude, il apparaît que l'hypothèse de la migration de ce composé organique à travers la structure multicouches du revêtement de sol en matériau souple du type PVC a été formulée. Ceci a été conforté par les analyses antérieures permettant de souligner le caractère chromophore des composés organiques à structure aromatique conjuguée de la famille du benzanylidène. Ces composés absorbent des rayons ultra-violets dans une gamme de longueurs d'ondes de 300 à 400 nm, ce qui génère cette coloration jaune.

Différentes solutions sont actuellement utilisées pour leur efficacité par rapport à la diffusion des gaz, et notamment de l'oxygène, pour limiter l'oxydation. Ces solutions sont généralement utilisées dans les applications alimentaires, emballages, films barrière de protection, par exemple les films barrières réalisés en polyester enduit de PVDC, ou films à structure sandwich (polyéthylène, aluminium, polyéthylène), ou selon d'autres compositions, assurent la fonction recherchée, mais ne sont pas applicables et compatibles avec la structure du revêtement de sols souples en PVC.

On connaît aussi, selon l'art antérieur, l'utilisation de charges du type argile à structure fibreuse dite sépiolite ou du type cyclodextrine greffé sur CACO3, mais dans les deux cas, il y a de fortes difficultés d'incorporation dans un revêtement PVC Plastifié.

D'autres solutions ont été envisagées avec la mise en oeuvre d'un revêtement nano-composite, qui ne peut être réalisé qu'en couche externe. On le dépose en couche mince par plasma atmosphérique, mais cela génère une consommation d'énergie considérable.

Le Demandeur a lui-même proposé avec un partenaire la mise en oeuvre d'un vernis mat spécifique, l'ensemble étant soumis à un rayonnement monochromatique de type EXCIMER, ce vernis étant apposé en couche externe. Cette technique a été décrite dans le brevet FR 2 934 601.

US 5 308 694 A divulgue un revêtement de sols souple comprenant une structure multicouches comprenant une couche intermédiaire barrière, pour inhiber la migration de substances organiques dans la partie décorative de revêtement, préparé en mélangeant du silicate de sodium dissous dans de l'eau avec une composition de plastisol contenant DINP et un agent dispersant.

En considérant tous ces éléments et connaissances de l'art antérieur , le Demandeur s'est orienté dans une démarche d'analyse très spécifique pour rechercher une solution compatible et adaptée aux revêtements de sols souples dans une configuration économique raisonnable en tenant compte des contraintes de fabrication, production et prix.

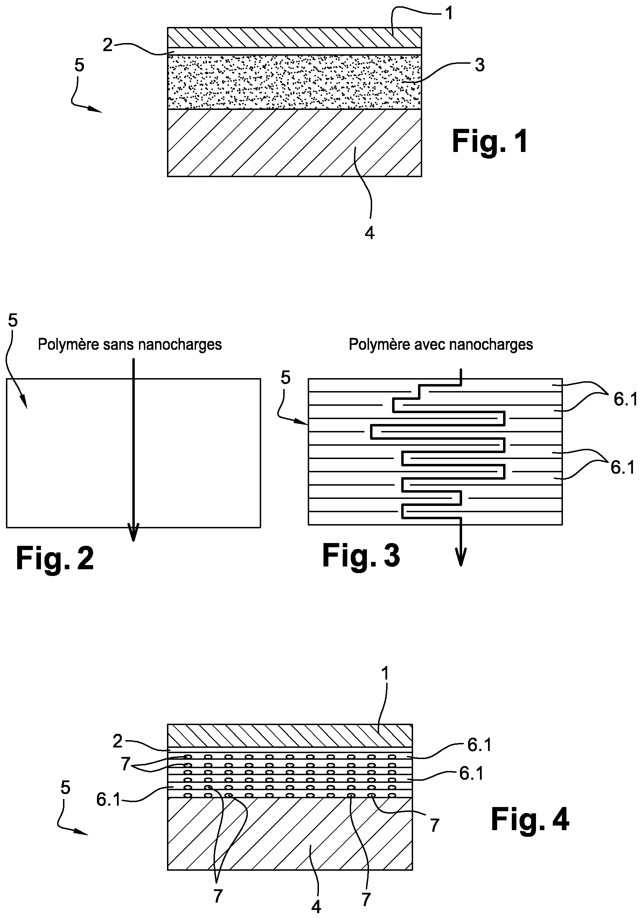

Il est tout d'abord rappelé que les revêtements de sols souples concernés ont une structure (S) identifiée figure 1, avec une couche d'usure (1) en PVC non chargé, une couche d'impression décor (2), une couche médiane imprimable (3). Cette couche est réalisée en PVC chargé avec des particules de composants TiCO2, CaCO3 et en non tissé de verre imprégné. La structure (S) comprend enfin une couche envers (4) constituée par une mousse à expansion chimique ayant une densité préréglée.

On connaît par ailleurs l'existence de nano-charges telles que nanoparticules lamellaires du type argile montmorillonite qui permettent de conférer d'excellentes propriétés barrière à un polymère en augmentant la tortuosité au sein de ce polymère. On a ainsi référencé aux figures 2 et 3 à titre schématique et pour comprendre l'invention une couche (5) en polymère sans nano-charges avec une orientation transversale directe de l'épaisseur de la dite couche selon les flèches (F). On a représenté figure 3 une couche (6) restructurée avec des nanoparticules lamellaires (6.1) définissant un cheminement en chicane en ayant un effet retardateur dans la traversée totale de la couche. Bien évidemment les nano-charges ont une configuration et des dimensions déterminées pour configurer l'effet chicane retardateur approprié.

A la connaissance du Demandeur, ces nanoparticules lamellaires sont utilisées, en particulier pour les produits d'emballage pour conférer certaines propriétés retardantes, mais non sur des produits de nature très différente dans leur structure et applications aux revêtements de sols souples.

En pratique, l'intégration de nanoparticules lamellaires telles quelles dans des revêtements de sols n'est pas envisageable en l'état, de par l'existence de contraintes supplémentaires propres à la conception des revêtements de sols, telles que les questions relatives aux problèmes de température de la fabrication du plastisol PVC. En effet, le plastisol PVC est sensible à la température et au-delà d'une température de 80°C, il commence à prégélifier et l'incorporation de nano-charges telles que les nano-charges lamellaires est délicate avec une réelle difficulté de dispersion car le plastisol monte vite en température, et surtout en viscosité.

C'est une des raisons qui font qu'à la connaissance du Demandeur, il n'y ait pas eu de développement dans ce sens.

Une autre contrainte résidait dans la maîtrise de la viscosité du produit pour être apte à permettre l'utilisation de nanoparticules lamellaires.

L'ensemble de ces contraintes n'ont pas permis d'aboutir favorablement à la mise au point de revêtements de sols souples adaptés pour combattre et retarder ces effets de jaunissement basé sur la problématique à l'origine de l'invention.

Le Demandeur s'est donc attaché à rechercher une solution qui puisse permettre de répondre à ce besoin pour les applications de revêtements de sols souples dans des conditions techniques et économiques satisfaisantes.

La solution apportée par le Demandeur répond à cet objectif en intégrant des phases de traitement spécifique des nano-charges telles que nanoparticules lamellaires faisant en sorte d'une intégration parfaite dans l'épaisseur des revêtements de sols souples et non en surface externe.

L'invention met en oeuvre ainsi un procédé de fabrication spécifique avec une structure produit constitutive du revêtement de sol souple.

Selon une première caractéristique, le revêtement de sols souple en PVC comprenant une structure multicouches avec une couche d'usure, une couche d'impression décor, une couche médiane imprimable et une couche envers à base de mousse, est remarquable en ce qu'il comprend dans son épaisseur et spécifiquement dans la couche médiane imprimable une composition intermédiaire sous-forme de mélange-maître de pâte homogène et manipulable incluant au moins un additif plastifiant notamment DINP, DIDP, au moins un agent dispersant, et des nanoparticules lamellaires à l'état séché, la dite composition intégrée dans la dite couche médiane imprimable assurant une fonction retardante de composés organiques en provenance de colles générant des effets de jaunissement sur la surface du revêtement, la dite composition définissant un cheminement en chicane dans toute l'épaisseur de la couche médiane imprimable..

Selon une autre caractéristique, le procédé de fabrication de revêtement de sols souple en PVC comprenant une structure multicouches avec une couche d'usure, une couche d'impression décor, une couche médiane imprimable et une couche envers à base de mousse, est remarquable en ce qu'il met en oeuvre la fabrication d'une composition intermédiaire constituant un mélange-maître destinée à être intégrée dans la couche médiane imprimable, la dite composition sous forme de pâte homogène et manipulable incluant l'utilisation de nanoparticules lamellaires en les empâtant dans un ou des additifs constitués par des phtalates du type DINP, DIDP, les dites nano-charges telles que nanoparticules lamellaires étant préalablement séchées avant d'être empâtées avec les dits additifs, et en ce que un ou des agents dispersants sont intégrés dans la dite composition.

Ces caractéristiques et d'autres encore ressortiront bien de la suite de la description.

Pour fixer l'objet de l'invention illustré d'une manière non limitative aux figures des dessins, où :
La figure 1 est une vue à caractère schématique de la structure connue d'un revêtement de sol souple exploité par le Demandeur,
Les figures 2 et 3 sont des vues à caractère schématique illustrant le cheminement direct et indirect de particules créant l'effet de jaunissement dans le cas où il n'y aurait aucune barrière au passage de celles-ci dans l'épaisseur de la couche considérée (figure 2) et aussi un effet retardateur (figure 3) par l'utilisation de nano-charges telles que nanoparticules lamellaires,
La figure 4 est une vue de la structure du revêtement de sol souple selon l'invention avec l'intégration de nano-charges telles que nanoparticules lamellaires traitées selon l'invention,
La figure 5 est un graphe illustrant un rapport de viscosité en fonction du taux de cisaillement à t=2H, des pâtes intermédiaires incluant des additifs du type DINP, DIDP, des agents dispersants et des nano-charges telles que nanoparticules lamellaires sèches.

Afin de rendre plus concret l'objet de l'invention, on le décrit maintenant d'une manière non limitative illustré au figures des dessins.

Selon l'invention, le procédé permettant de réaliser des revêtements de sols souple en PVC, incluant des nano-charges telles que nanoparticules lamellaires dans une structure de revêtement comprenant une couche d'usure (1), une couche impression décor (2), une couche médiane imprimable (3) et une couche envers (4) composée de mousse, consiste à fabriquer une composition intermédiaire constituant un mélange-maître sous forme de pâte homogène et manipulable à partir de nano-charges telles que nanoparticules lamellaires, en les empâtant dans un ou des additifs constitués par des phtalates connus sous des sigles DINP et/ou DIDP de manière à améliorer d'une part leur dispersion et d'autre part leur exfoliation, en vue d'obtenir un mélange insensible à la température. Ce ou ces additifs permet(tent) d'une manière connue d'augmenter la flexibilité des plastiques du type PVC constitués par les revêtements PVC souples.

Selon une autre phase du procédé, les nano-charges telles que nanoparticules lamellaires sont préalablement séchées avant d'être empâtées. Le séchage a des conséquences importantes sur la rhéologie de la pâte ainsi obtenue avec une viscosité beaucoup moins élevée et un faible gradian de cisaillement. Le taux d'humidité résiduel des nano-charges lamellaires ne peut excéder 1%. En combinaison, on incorpore également dans cette pâte au moins un agent dispersant qui peut être un ester acide polaire d'alcool à longues chaînes connu en soi et commercialisé sous les marques 'ZELEC' 'FB095' ou 'DISPERHYK 1150'. L'incorporation de l'agent dispersant dans la pâte obtenue incluant des nano-charges lamellaires améliore de manière substantielle la rhéologie et permet d'exfolier au mieux les nano-charges. On obtient par exemple une composition des mélanges avec l'additif DINP, l'agent dispersant du type 'ZELEC', 'FB095' et les nano-charges lamellaires sèches, composition qui est incorporée dans la couche médiane imprimable comme représenté figure 4 des dessins. La composition (7) présentée inclut dans des fourchettes l'additif entre 60% et 20% de la composition, l'agent dispersant entre 0 et 40%, et les nano-charges lamellaires sèches entre 40 à 50%. Selon une répartition optimisée, la composition (7) précitée peut comprendre en pourcentage une répartition à 20 % de l'additif DINP, ou DIDP à 40 % du dispersant et 40 % des nano-charges telles que nanoparticules lamellaires sèches. La composition (7) est intégrée dans la couche médiane imprimable (3) en formant un tout. Sur la figure 4 la référence (7) vise l'ensemble de la composition incluant les dits composants

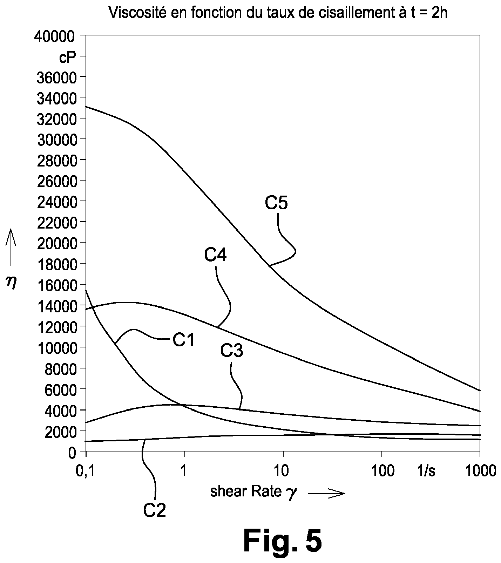

Ci-après est établi un tableau prévoyant cinq cas de répartition des différents composants de la composition, en étroite relation ensuite avec le graphe représenté en figure 5 qui permet l'identification de courbes de viscosité en fonction du taux de cisaillement à t=2H. Il est observé que la composition identifiée en "5" offre le meilleur rapport de viscosité par rapport au taux de cisaillement en limitant la sédimentation des nano-charges lamellaires. Les compositions sont identifiées C1, C2, C3, C4, C5.

| | **C1** | **C2** | **C3** | **C4** | **C5** |
|---|---|---|---|---|---|
| **Additif DINP** | 60 | 50 | 40 | 30 | 20 |
| **Agent Dispersant ZELEC FB095** | 0 | 10 | 20 | 30 | 40 |
| **Nano-charges sèches** | 40 | 40 | 40 | 40 | 40 |

Les essais qui ont été effectués à partir de cette composition intermédiaire et incluse dans la couche médiane imprimable du revêtement de sols souple ont permis de constater l'effet retardant des particules générées par les colles entraînant l'apparition de tâches jaunâtres sur les faces apparentes des revêtements de sols. En d'autres termes, l'invention permet par son procédé particulier de répondre à la problématique posée.

## Revendications

1. Revêtement de sols souple en PVC comprenant une structure multicouches (S) avec une couche d'usure (1), une couche d'impression décor (2), une couche médiane imprimable (3) et une couche envers (4) à base de mousse, **caractérisé en ce qu'**il comprend dans son épaisseur et spécifiquement dans la couche médiane imprimable une composition intermédiaire sous-forme de mélange-maître (7) de pâte homogène et manipulable incluant au moins un additif plastifiant notamment DINP, DIDP, au moins un agent dispersant, et des nano-charges lamellaires à l'état séché, la dite composition intégrée dans la dite couche médiane imprimable assurant une fonction retardante de composés organiques en provenance de colles générant des effets de jaunissement sur la surface du revêtement, la dite composition définissant un cheminement en chicane dans toute l'épaisseur de la couche médiane imprimable.

2. Revêtement selon la revendication 1, **caractérisé en ce que** la composition (7) présentée inclut dans des fourchettes l'additif entre 60% et 20% de la composition, l'agent dispersant entre 0 et 40%, et les nano-charges lamellaires sèches entre 40 à 50%.

3. Revêtement selon la revendication 1, **caractérisé en ce que** la composition intégrée comprend 20% d'additif plastifiant, 40% d'agent dispersant, 40 % de nano-charges lamellaires.

4. Revêtement selon la revendication 1, **caractérisé en ce que** l'agent dispersant est un ester acide polaire à longues chaînes.

5. Procédé de fabrication de revêtement de sols souple en PVC comprenant une structure multicouches (S) avec une couche d'usure (1), une couche d'impression décor (2), une couche médiane imprimable (3) et une couche envers à base de mousse (4), **caractérisé en ce qu'**il met en oeuvre la fabrication d'une composition intermédiaire constituant un mélange-maître destinée à être intégrée dans la couche médiane imprimable, la dite composition incluant sous forme de pâte homogène et manipulable l'utilisation de nano-charges lamellaires en les empâtant dans un ou des additifs notamment constitués par des phtalates du type DINP, DIDP les dites nano-charges lamellaires étant préalablement séchées avant d'être empâtées avec les dits additifs, **et en ce que** un ou des agents dispersants sont intégrés dans la dite composition.

6. Procédé selon la revendication 5, **caractérisé en ce que** la composition (7) présentée inclut dans des fourchettes l'additif entre 60% et 20% de la composition, l'agent dispersant entre 0 et 40%, et la nano-charges sèches entre 40 à 50%.

7. Procédé selon la revendication 5, **caractérisé en ce que** la composition comprend en répartition 20% d'additif plastifiant DINP, 40% de dispersant et 40% de nano-charges lamellaires séchées.

8. Procédé selon la revendication 6, **caractérisé en ce que** le taux d'humidité résiduel des nano-charges lamellaires ne peut excéder 1%.

## Patentansprüche

1. Flexibler PVC-Bodenbelag, umfassend einen mehrschichtigen Aufbau (S) mit einer Verschleißschicht (1), einer dekorativen Druckschicht (2), einer bedruckbaren Zwischenschicht (3) und einer schaumbasierten Trägerschicht (4), **dadurch gekennzeichnet, dass** er in seiner Dicke und insbesondere in der bedruckbaren Mittelschicht eine Zwischenzusammensetzung in Form eines Masterbatch (7) aus homogener und manipulierbarer Paste umfasst, die mindestens ein Weichmacheradditiv, insbesondere DINP, DIDP, mindestens ein Dispergiermittel und lamellare Nanofüllstoffe im getrockneten Zustand einschließt, wobei die Zusammensetzung in die bedruckbare Mittelschicht integriert ist und eine verzögernde Funktion organischer Verbindungen aus Klebstoffen, die Vergilbungseffekte auf der Oberfläche der Beschichtung erzeugen, gewährleistet, wobei die Zusammensetzung eine Sperrschicht über die Dicke der bedruckbaren Mittelschicht definiert.

2. Belag nach Anspruch 1, **dadurch gekennzeichnet, dass** die vorgestellte Zusammensetzung (7) das Additiv im Bereich zwischen 60 % und 20 % der Zusammensetzung, das Dispergiermittel im Bereich zwischen 0 und 40 % und die trockenen lamellaren Nanofüllstoffe im Bereich zwischen 40 % und 50 % einschließt.

3. Belag nach Anspruch 1, **dadurch gekennzeichnet, dass** die integrale Zusammensetzung 20 % Weichmacheradditiv, 40 % Dispergiermittel, 40 % lamellare Nanofüllstoffe umfasst.

4. Belag nach Anspruch 1, **dadurch gekennzeichnet, dass** das Dispergiermittel ein polarer langkettiger Säureester ist.

5. Verfahren zur Herstellung von flexiblen PVC-Böden, umfassend eine mehrschichtige Struktur (S) mit einer Verschleißschicht (1), einer dekorativen Druckschicht (2), einer bedruckbaren Mittelschicht (3) und einer schaumbasierten Trägerschicht (4), **dadurch gekennzeichnet, dass** es die Herstellung einer Zwischenzusammensetzung durchführt, die ein Masterbatch bildet, das zur Integration in die bedruckbare Mittelschicht bestimmt ist, wobei die Zusammensetzung in Form einer homogenen und manipulierbaren Paste die Verwendung von lamellaren Nanofüllstoffen einschließt, indem sie in eines oder mehreren Additive pastiert wird, insbesondere in solche, die aus Phthalaten vom Typ DINP, DIDP bestehen, wobei die lamellaren Nanofüllstoffe zuvor getrocknet wurden, bevor sie mit den Additiven pastiert werden, **und dadurch, dass** ein oder mehrere Dispergiermittel in die Zusammensetzung integriert sind.

6. Verfahren nach Anspruch 5, **dadurch gekennzeichnet, dass** die vorgestellte Zusammensetzung (7) das Additiv im Bereich zwischen 60 % und 20 % der Zusammensetzung, das Dispergiermittel im Bereich zwischen 0 und 40 % und die trockenen Nanofüllstoffe im Bereich zwischen 40 % und 50 % einschließt.

7. Verfahren nach Anspruch 5, **dadurch gekennzeichnet, dass** die Zusammensetzung 20 % DINP-Weichmacheradditiv, 40 % Dispergiermittel und 40 % getrocknete lamellare Nanofüllstoffe umfasst.

8. Verfahren nach Anspruch 6, **dadurch gekennzeichnet, dass** der Restfeuchtegehalt der lamellaren Nanofüllstoffe 1 % nicht überschreiten darf.

## Claims

1. A flexible PVC floor covering comprising a multilayer structure (S) with a wear layer (1), a printable decorative layer (2), a printable core layer (3) and a backing layer (4) made of foam, **characterized in that** it comprises in its thickness and specifically in the printable core layer an intermediate composition in the form of a master-batch (7) of homogeneous and manipulable paste including at least one plasticizer additive in particular DINP, DIDP, at least one dispersant, and dried lamellar nanofillers, said composition integrated into said printable core layer ensuring a retardant function for organic compounds originating from adhesives generating yellowing effects on the surface of the coating, said composition defining a chicane path through the entire thickness of the printable core layer.

2. The covering according to claim 1, **characterized in that** the composition (7) presented includes in ranges the additive between 60% and 20% of the composition, the dispersant between 0 and 40%, and the dried lamellar nanofillers between 40 to 50%.

3. The covering according to claim 1, **characterized in that** the integrated composition comprises 20% of plasticizer additive, 40% of dispersant, 40% of lamellar nanofillers.

4. The covering according to claim 1, **characterized in that** the dispersant is a polar long-chain acid ester.

5. A manufacturing process for flexible floor coverings made of PVC comprising a multilayer structure (S) with a wear layer (1), a printable decorative layer (2), a printable core layer (3) and a backing layer made of foam (4), **characterized in that** it implements the manufacturing of an intermediate composition constituting a master-batch intended to be integrated in the printable core layer, said composition including in the form of a homogeneous and manipulable paste the use of lamellar nanofillers by making a paste of them in an additive or additives in particular constituted by phthalates of the DINP, DIDP type, said lamellar nanofillers being previously dried before being made into a paste with said additives, **and in that** a dispersant or dispersants are integrated into said composition.

6. The process according to claim 5, **characterized in that** the composition (7) presented includes in ranges the additive between 60% and 20% of the composition, the dispersant between 0 and 40%, and the dried nanofillers between 40 to 50%.

7. The process according to claim 5, **characterized in that** the composition comprises in distribution 20% of plasticizer additive DINP, 40% of dispersant and 40% of dried lamellar nanofillers.

8. The process according to claim 6, **characterized in that** the residual moisture content of the lamellar nanofillers cannot exceed 1%.
